# EUROPEAN PATENT APPLICATION

(11) **EP 4 215 430 A1**
(43) Date of publication of application: **26.07.2023**
(21) Application number: 21869365.3
(22) Date of filing: 14.09.2021
(51) Int. Cl.: B62J 17/10, B62J 23/00, B62J 25/02

(54) **STRADDLED VEHICLE**

(30) Priority: 18.09.2020 JP 2020157663
(71) Applicant: Yamaha Hatsudoki Kabushiki Kaisha, Iwata-shi, Shizuoka 438-8501 (JP)
(72) Inventor: MIMURA, Satoshi, Iwata-shi Shizuoka 438-8501 (JP); UEDA, Daisuke, Iwata-shi Shizuoka 438-8501 (JP)
(74) Representative: Studio Torta S.p.A.
(86) International application number: PCT/JP2021/033783
(87) International publication number: WO 2022/059679

(57) **Abstract**

A fuel tank is disposed behind a head pipe. A seat is disposed behind the fuel tank. A knee grip member is disposed behind the head pipe. The knee grip member includes a knee grip portion. The knee grip portion is disposed forward and downward of the seat and is sandwiched by right and left knees of a rider. A step is disposed rearward and downward of the knee grip portion. An exterior cover is disposed lateral to the head pipe. The exterior cover includes an inner panel, an outer panel, and a traveling wind pathway. The traveling wind pathway is formed between the inner panel and the outer panel to cause traveling wind coming from ahead to flow therethrough. An aero-stabilizing plate directs the traveling wind flowing through the traveling wind pathway to the knee grip portion. The aero-stabilizing plate has a flat plate shape, is integrally molded with the inner panel, and protrudes outward from the inner panel in a vehicle width direction to be supported by the inner panel in a cantilevered manner.

## Description

### TECHNICAL FIELD

The present invention relates to a straddled vehicle.

### BACKGROUND ART

There has been conventionally known a type of straddled vehicle with a structure whereby a downforce acts on a vehicle body. For example, a straddled vehicle disclosed in PTL 1 includes a traveling wind pathway, provided in a side cowl, and an aero-stabilizing member. The aero-stabilizing member is made in shape of a wing or fin and generates a downforce that acts on a vehicle body by traveling wind flowing through the traveling wind pathway.

### CITATION LIST

### PARENT LITERATURE

PTL1: Publication of Japan Patent No. 6663949

### SYMARRY OF THE INVENTION

### Technical Problems

In attempt to generate a downforce enough to affect traveling of a vehicle by the aero-stabilizing member per se, the aero-stabilizing member is required to be enlarged to some extent and is also made complicated in shape. Furthermore, the aero-stabilizing member is also required to be enhanced in strength and/or stiffness. To cope with the above, in PTL 1, an inner cowl and the aero-stabilizing member are provided as components separated from each other; then, the aero-stabilizing member is fixed to the inner cowl by inserting the aero-stabilizing member through a through hole provided in the inner cowl. Besides, the aero-stabilizing member is provided with a reinforcing wall so as to be enhanced in strength and/or stiffness. Moreover, in order to generate a downforce, the aero-stabilizing member has a curved shape to protrude downward.

As described above, in attempt to generate a downforce enough to affect traveling of the vehicle by the aero-stabilizing member per se, the shape of the aero-stabilizing member becomes more complex and the size of the aero-stabilizing member becomes larger.

It is an object of the present invention to generate a downforce in a straddled vehicle with a simple structure.

### Solution to Problems

A straddled vehicle according to an aspect of the present invention includes a vehicle body frame, a fuel tank, a seat, a knee grip member, a step, an exterior cover, and an aero-stabilizing plate. The vehicle body frame includes a head pipe. The fuel tank is disposed behind the head pipe. The seat is disposed behind the fuel tank. The knee grip member is disposed behind the head pipe. The knee grip member includes a knee grip portion disposed forward and downward of the seat and is sandwiched by right and left knees of a rider. The step, on which a foot of the rider is put, is disposed rearward and downward of the knee grip portion. The exterior cover is disposed lateral to the head pipe. The exterior cover includes an inner panel, an outer panel, and a traveling wind pathway. The outer panel is disposed outside the inner panel in a vehicle width direction. The traveling wind pathway is formed between the inner panel and the outer panel to cause traveling wind coming from ahead to flow therethrough. The aero-stabilizing plate directs the traveling wind flowing through the traveling wind pathway to the knee grip portion. The aero-stabilizing plate, has a flat plate shape, is integrally molded with the inner panel and protrudes outward from the inner panel in the vehicle width direction to be supported by the inner panel in a cantilevered manner.

In the straddled vehicle according to the present aspect, the traveling wind, flowing through the traveling wind pathway, is directed to the knee grip portion by the aero-stabilizing plate, whereby the traveling wind, flowing through the traveling wind pathway, hits the upper surface of the thigh of the rider so as to generate a downforce. In other words, the straddled vehicle according to the present aspect is configured such that the downforce acts on the vehicle body not by the aero-stabilizing plate per se but through the rider. The aero-stabilizing plate is provided for directing the traveling wind, flowing through the traveling wind pathway, to the knee grip portion; hence, a downforce is almost not generated at the aero-stabilizing plate.

In detail, the aero-stabilizing plate has a flat plate shape, and the aero-stabilizing plates 51 and 52 per se do not generate enough downforce to affect traveling of the straddled vehicle. Because of this, increase in size of, and complexity in shape of, the aero-stabilizing plate can be inhibited compared to a configuration that a downforce is generated at the aero-stabilizing plate per se. Furthermore, necessity to enhance the strength and/or the stiffness of the aero-stabilizing plate is lessened; hence, the aero-stabilizing plate can be made in a quite simple and compact structure. As a result, a downforce can be generated in the straddled vehicle with the simple structure.

Besides, an effect of inhibiting a lift from acting on the rider can be obtained; hence, the rider is enabled to easily keep a riding style in high-speed traveling or so forth, whereby the rider is enhanced in comfortableness. Moreover, the rider becomes likely to feel a sense of unity with the vehicle body. Furthermore, the aero-stabilizing plate is made in shape of a flat plate not in shape of a wing or fin; hence, traveling wind can be accurately led to the vicinity of the thigh of the rider by the aero-stabilizing plate. Furthermore, the aero-stabilizing plate is supported by the inner panel in a cantilevered manner; hence, the aero-stabilizing plate can be disposed on a vehicle inner side than that supported by the outer panel in a cantilevered manner. In other words, the aero-stabilizing plate can be disposed in a closer position to the thigh of the rider than that supported by the outer panel in a cantilevered manner; hence, the traveling wind becomes likely to be led to the vicinity of the thigh of the rider by the aero-stabilizing plate.

At least a portion of the aero-stabilizing plate may be exposed from the outer panel in a vehicle side view. In this case, it is easy to secure a length and/or an area of the aero-stabilizing plate required for causing the traveling wind to hit the vicinity of the thigh of the rider.

A rear end of the aero-stabilizing plate may be located on a vehicle upper side than a lower end of the knee grip portion. In this case, the traveling wind becomes more likely to be led to the vicinity of the thigh of the rider by the aero-stabilizing plate.

The rear end of the aero-stabilizing plate may be located on an upper side than a front end of the aero-stabilizing plate. In this case, the traveling wind becomes more likely to be led to the vicinity of the thigh of the rider by the aero-stabilizing plate.

The exterior cover may further include an inlet for introducing the traveling wind to the traveling wind pathway. The rear end of the aero-stabilizing plate may be located on a lower side than an upper end of the inlet. In this case, the traveling wind becomes more likely to be led to the vicinity of the thigh of the rider by the aero-stabilizing plate.

The knee grip member may be a fuel tank. In this case, since the fuel tank also serves as the knee grip member, reduction in number of components can be made.

The aero-stabilizing plate may include a first aero-stabilizing plate and a second aero-stabilizing plate disposed below the first aero-stabilizing plate. The second aero-stabilizing plate may protrude more outward than the first aero-stabilizing plate in the vehicle width direction. In this case, the traveling wind becomes more likely to be led to the vicinity of the thigh of the rider by the aero-stabilizing plate.

### Advantageous Effects of Invention

According to the present invention, a downforce can be generated in a straddled vehicle with a simple structure.

### BRIEF DESCRIPTION OF THE DRAWINGS

FIG. 1 is a left side view of a straddled vehicle.
FIG. 2 is a front view of the straddled vehicle.
FIG. 3 is a view of a vehicle body frame and an exterior cover seen from a front side of the vehicle.
FIG. 4 is a view of the exterior cover and the surroundings thereof seen from a left rear side of the vehicle.
FIG. 5 is a left side view of an inner panel.
FIG. 6 is a partial left side view of the exterior cover.
FIG. 7 is a partial cross-sectional view taken along line VII-VII in FIG. 5.
FIG. 8 is a cross-sectional view taken along line VIII-VIII in FIG. 6.
FIG. 9 is a partial left side view of the straddled vehicle.

### DESCRIPTION OF EMBODIMENTS

An embodiment of a straddled vehicle according to an aspect of the present invention will be explained with reference to drawings. It should be noted that in the following explanation, terms indicating such directions as "back and forth", "up and down", and "right and left" are explained based on directions seen from a rider in operation of a straddled vehicle 100. Therefore, a right-and-left direction is synonymous with a vehicle width direction. Besides, the term "outer side in a vehicle width direction" means a side far from the center of the straddled vehicle in the vehicle width direction. The term "inner side in the vehicle width direction" means a side near to the center of the straddled vehicle in the vehicle width direction.

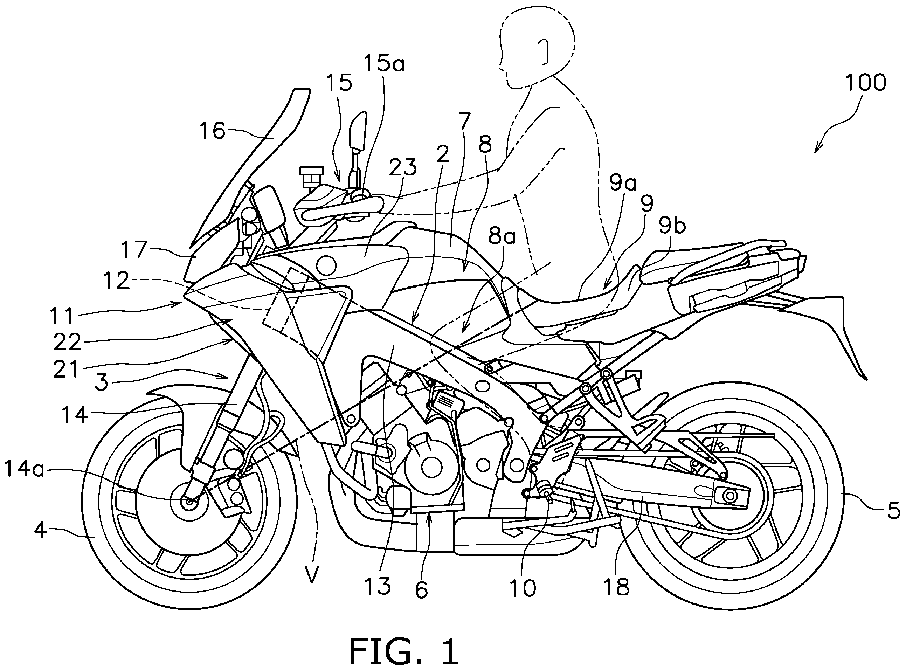

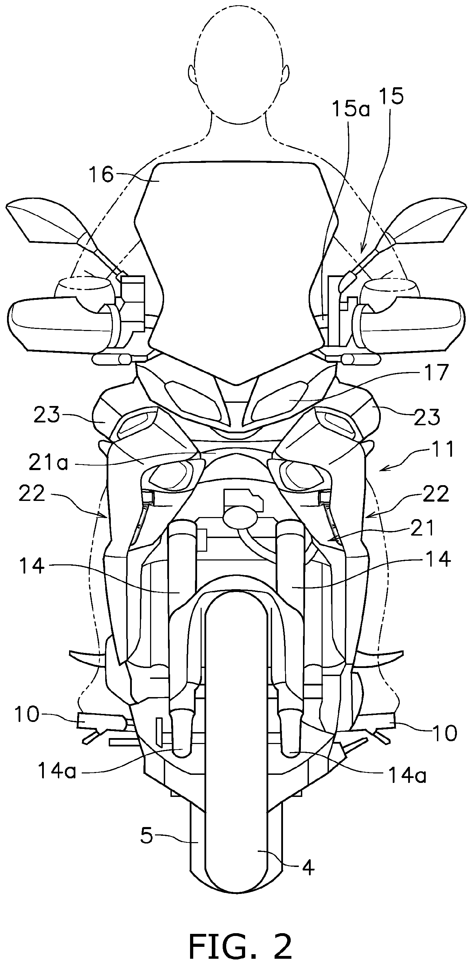

FIG. 1 is a left side view of the straddled vehicle 100. FIG. 2 is a front view of the straddled vehicle 100. The straddled vehicle 100 includes a vehicle body frame 2, a steering device 3, a front wheel 4, a rear wheel 5, an engine 6, a fuel tank 7, a knee grip member 8, a seat 9, steps 10, and a vehicle body cover 11.

The vehicle body frame 2 includes a head pipe 12 and a main frame 13. The head pipe 12 extends forward and downward. The head pipe 12 is disposed in the center of the straddled vehicle 100 in the vehicle width direction.

The main frame 13 is connected at the front end thereof to the head pipe 12. The main frame 13 is composed of a pair of parts provided right and left. The main frame 13 branches from the head pipe 12 to the left and right and extends rearward from the head pipe 12. It should be noted that the term "connection" is not limited to direct connection and encompasses indirect connection. Besides, the term "connection" is not limited to a condition that separate members are fixed to each other and encompasses a condition that a plurality of portions in an integrated member continue to each other.

The steering device 3 is rotatably supported by the head pipe 12. The steering device 3 includes a front fork 14 and a handle portion 15. The front fork 14 is composed of a pair of parts provided right and left. The front fork 14 extends forward and downward. The front fork 14 is connected at a lower end 14a thereof to the front wheel 4. The handle portion 15 is connected to the front fork 14. The handle portion 15 includes a handlebar 15a extending in the right-and-left direction. The handlebar 15a is provided with grips on both ends thereof. A wind shield 16 is disposed in front of the handle portion 15. Position lights 17 are disposed below the wind shield 16.

The front wheel 4 is rotatably supported by the front fork 14. The rear wheel 5 is rotatably supported by a swing arm 18 disposed behind the engine 6.

The engine 6 is supported by the vehicle body frame 2. The engine 6 is disposed below the main frame 13.

The fuel tank 7 is disposed behind the head pipe 12. The fuel tank 7 is disposed above the engine 6 and the main frame 13.

The knee grip member 8 is disposed behind the head pipe 12. In the present embodiment, the knee grip member 8 is integrated with the fuel tank 7. In other words, the fuel tank 7 also serves as the knee grip member 8. The knee grip member 8 includes a knee grip portion 8a. The knee grip portion 8a is sandwiched by the right and left knees of the rider during traveling of the straddled vehicle 100. Besides, when the rider grips the knee grip portion 8a by the knees, an inner side of a thigh near the knee of the rider contact the knee grip portion 8a.

The knee grip portion 8a is provided on the right and left lateral surfaces of the fuel tank 7. For example, the knee grip portion 8a is shaped to be recessed from the outer side to the inner side in the vehicle width direction. The knee grip portion 8a is disposed forward and downward of the seat 9. Because of this, when the rider grips the knee grip portion 8a by the knees, the thigh of the rider is kept tilted forward and downward with respect to a horizontal direction in a vehicle side view. Preferably, the knee grip portion 8a is disposed in an overlapping position with a virtual line V connecting the lower end 14a of the front fork 14 and the seat 9 in the vehicle side view.

The seat 9 is disposed behind the fuel tank 7. The seat 9 includes a seating surface 9a and lateral surfaces 9b. The seating surface 9a is provided on the upper surface of the seat 9. The seating surface 9a extends in both the back-and-forth direction and the vehicle width direction. The seating surface 9a is disposed upward and rearward of the knee grip portion 8a. The lateral surfaces 9b extend downward from both vehicle width-directional ends of the seating surface 9a.

The steps 10 are components on which the rider puts the feet. The steps 10 are a pair of components provided right and left. The steps 10 have a rod shape and extend in the vehicle width direction. The steps 10 are disposed rearward and downward of the knee grip portion 8a. The steps 10 are disposed below the seat 9. When the rider grips the knee grip portion 8a by the knees, a lower thigh of the rider is kept tilted rearward and downward with respect to the horizontal direction in the vehicle side view.

The vehicle body cover 11 is made of resin. As shown in FIG. 2, the vehicle body cover 11 includes a front cover 21, exterior covers 22, and side covers 23. The front cover 21, the exterior covers 22 and the side covers 23 are respectively a pair of parts provided right and left.

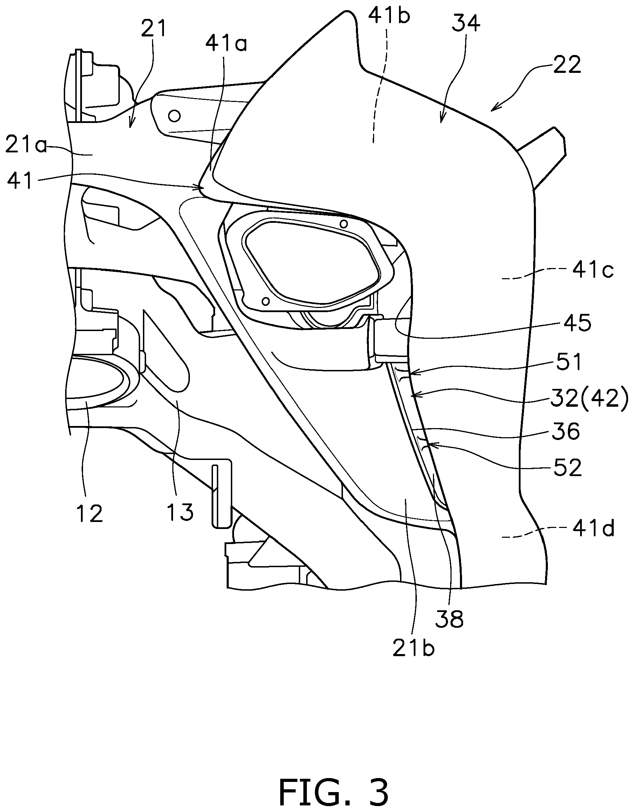

FIG. 3 is a view of the vehicle body frame 2 and the exterior cover 22 seen from a front side of the vehicle. The front cover 21 is disposed below the position lights 17. The front cover 21 includes a middle portion 21a and lateral portions 21b. The middle portion 21a is disposed in the middle of the straddled vehicle 100 in the vehicle width direction. The middle portion 21a is disposed in front of the head pipe 12. The middle portion 21a supports the position lights 17. The lateral portions 21b are a pair of portions provided right and left. The lateral portions 21b extend rearward and downward from both vehicle width-directional ends of the middle portion 21a. The rear end of each lateral portion 21b is located on an outer side than the front end thereof in the vehicle width direction. In other words, the lateral portions 21b extend downward and outward in the vehicle width direction from both vehicle width-directional ends of the middle portion 21a in a vehicle front view.

The exterior covers 22 are disposed lateral to the head pipe 12. The exterior covers 22 cover the head pipe 12 from outside in the vehicle width direction. Each exterior cover 22 includes an inner panel 32, an outer panel 34, an inlet 36, and a traveling wind pathway 38.

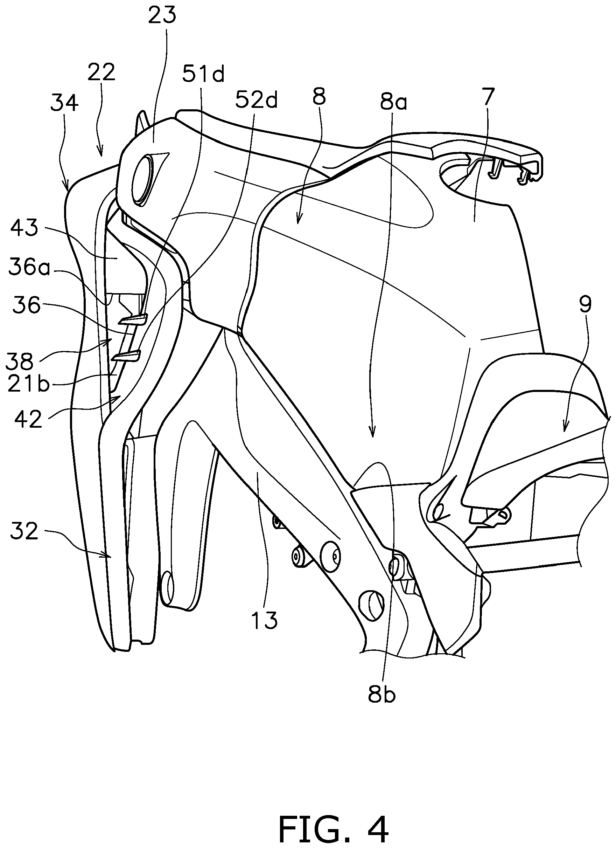

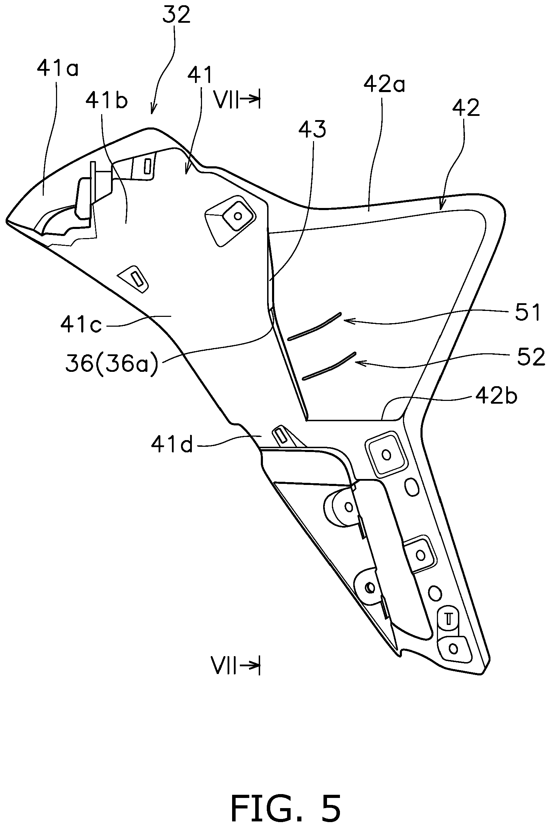

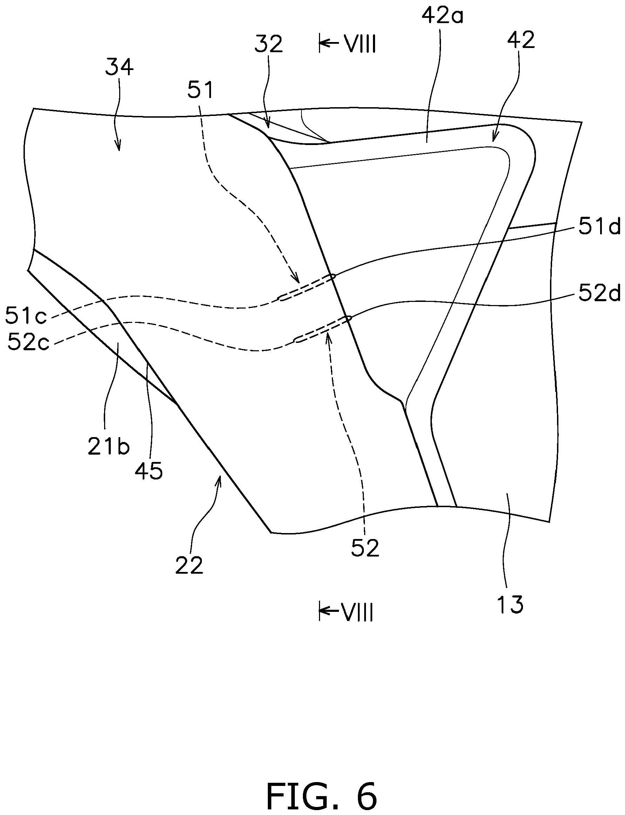

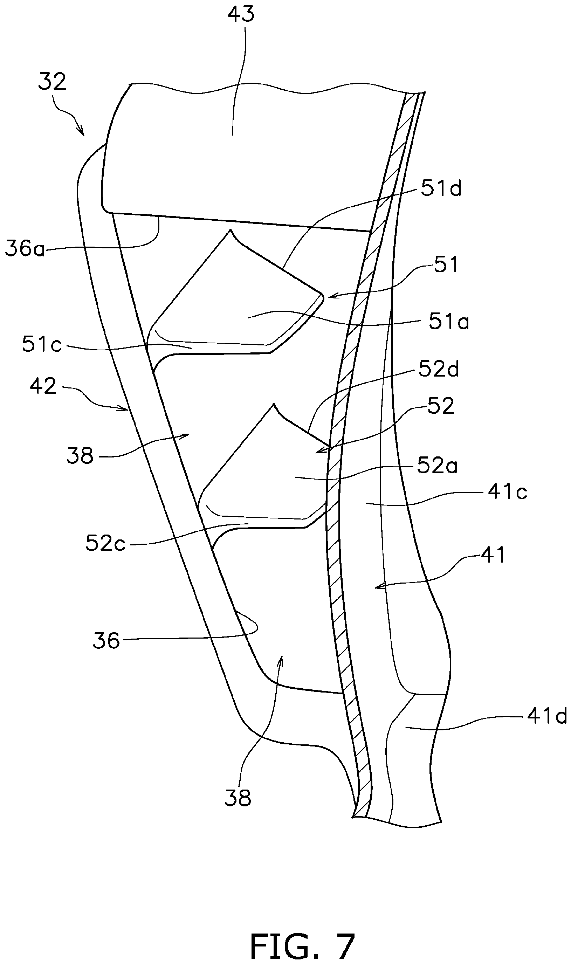

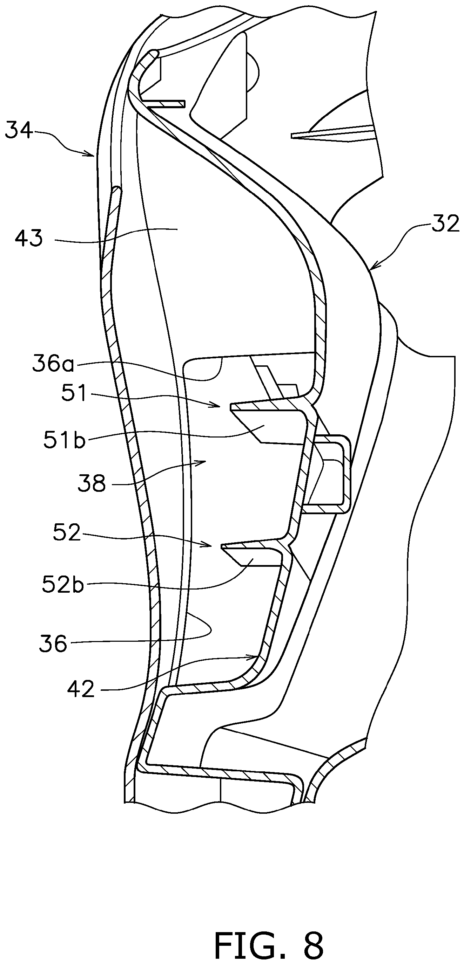

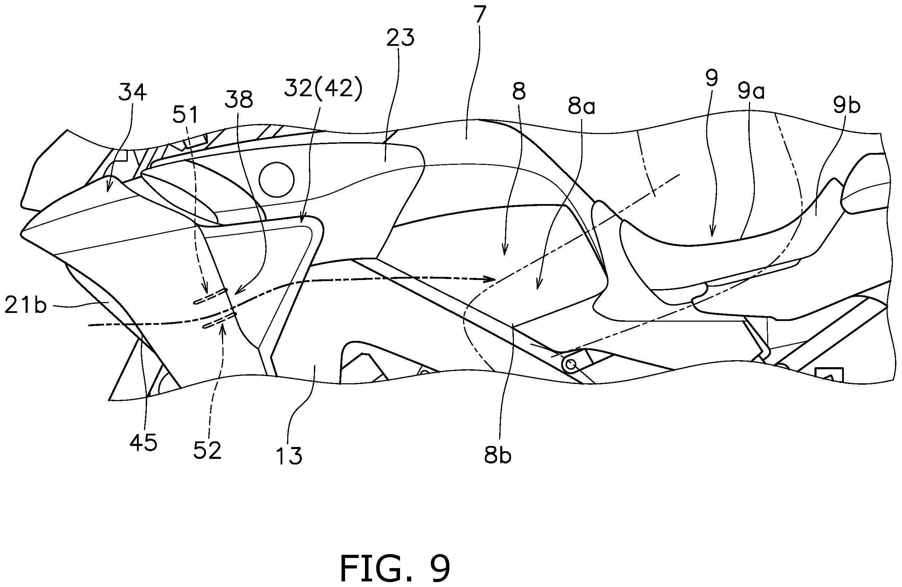

FIG. 4 is a view of the exterior cover 22 and the surroundings thereof seen from a left rear side of the vehicle. FIG. 5 is a left side view of the inner panel 32. FIG. 6 is a partial left side view of the exterior cover 22. FIG. 7 is a partial cross-sectional view taken along line VII-VII in FIG. 5. FIG. 8 is a cross-sectional view taken along line VIII-VIII in FIG. 6. FIG. 9 is a partial left side view of the straddled vehicle.

The inner panel 32 is fixed to the front cover 21 and side cover 23. As shown in FIG. 5, the inner panel 32 includes a first panel 41, a second panel 42, and a wall portion 43.

The first panel 41 is disposed lateral to lateral portion 21b of the front cover 21. The first panel 41 covers the lateral portion 21b of the front cover 21 from outside in the vehicle width direction such that an opening 45 (see FIG. 3), into which traveling wind coming from ahead flows, is formed therebetween.

As shown in FIGS. 3 and 5, the first panel 41 includes an upper portion 41a, a first extending portion 41b, a second extending portion 41c, and a lower portion 41d. The upper portion 41a extends in the back-and-forth direction. The upper portion 41a is fixed to the middle portion 21a of the front cover 21. The first extending portion 41b extends outward from the upper portion 41a in the vehicle width direction. The second extending portion 41c extends downward and rearward from the first extending portion 41b so as to laterally cover the lateral portion 21b. The second extending portion 41c is separated from the lateral portion 21b in the vehicle width direction. The lower portion 41d is fixed to the lower end of the lateral portion 21b of the front cover 21. The lower portion 41d is located on an outer side than the upper portion 41a in the vehicle width direction. The lower portion 41d extends downward and rearward from the second extending portion 41c.

As shown in FIGS. 3 and 4, the second panel 42 is disposed behind the lateral portion 21b with a slight gap in the back-and-forth direction from the lateral portion 21b. The second panel 42 is disposed to continue to a portion of the lateral portion 21b in the back-and-forth direction. As shown in FIG. 4, the second panel 42 is shaped to recess inward in the vehicle width direction. As shown in FIG. 7, the second panel 42 is disposed on an inner side than the second extending portion 41c in the vehicle width direction.

As shown in FIG. 5, the second panel 42 is disposed behind the second extending portion 41c in the vehicle side view. An upper end 42a of the second panel 42 extends rearward from the vicinity of a boundary between the upper portion 41a and the first extending portion 41b of the first panel 41 in the vehicle side view. A lower end 42b of the second panel 42 is connected to the lower portion 41d. The lower end 42b of the second panel 42 extends rearward from the lower end of the second extending portion 41c in the vehicle side view. The upper end 42a of the second panel 42 extends more rearward than the lower end 42b of the second panel 42.

The wall portion 43 extends in the vehicle width direction between the second extending portion 41c and the second panel 42. The wall portion 43 is connected to the second extending portion 41c and the second panel 42. The lower end of the wall portion 43 is located on an upper side than the lower end of the second extending portion 41c and the lower end 42b of the second panel 42.

The outer panel 34 is disposed outside the inner panel 32 in the vehicle width direction. The outer panel 34 is fixed to the inner panel 32 so as to cover the inner panel 32 from outside in the vehicle width direction. In detail, as shown in FIGS. 3 and 6, the outer panel 34 covers the entirety of the first panel 41. As shown in FIG. 8, the outer panel 34 covers at least a portion of the second panel 42 from outside in the vehicle width direction so as to form the traveling wind pathway 38 therebetween. In the present embodiment, the outer panel 34 covers a portion of the second panel 42 that is adjacent to the second extending portion 41c of the first panel 41. The second panel 42 is exposed at an approximately rear half thereof without being covered with the outer panel 34.

The inlet 36 introduces the traveling wind coming from ahead through the opening 45 to the traveling wind pathway 38. The inlet 36 is an opening penetrating in the back-and-forth direction. As shown in FIG. 3, the inlet 36 partially overlaps with the opening 45 in the vehicle front view. The inlet 36 partially overlaps with the outer panel 34 in the vehicle front view. As shown in FIG. 4, an upper end 36a of the inlet 36 is located on an upper side than the lower end of the head pipe 12. In the present embodiment, the inlet 36 is formed between the first panel 41 and the second panel 42. The inlet 36 is formed below the wall portion 43. The upper end 36a of the inlet 36 corresponds to the lower end of the wall portion 43. The inlet 36 extends from the lower end of the wall portion 43 to the lower end 42b of the second panel 42. The upper end 36a of the inlet 36 is located on a lower side than the seat 9. As shown in FIG. 4, the upper end 36a of the inlet 36 is located upward of a lower end 8b of the knee grip portion 8a. The lower end of the inlet 36 is located on a lower side than the knee grip portion 8a. The lower end of the inlet 36 is located on an upper side than the engine 6.

The traveling wind pathway 38 causes traveling wind, coming from ahead, to flow therethrough. The traveling wind, coming from ahead, flows into the opening 45 and is then introduced to the traveling wind pathway 38 from the inlet 36. The traveling wind introduced from the inlet 36 passes through the traveling wind pathway 38 and flows rearward. In detail, after passing through the traveling wind pathway 38, the traveling wind passes through a lateral side of the fuel tank 7. In other words, after passing through the traveling wind pathway 38, the traveling wind passes through a lateral side of the knee grip portion 8a.

The traveling wind pathway 38 is formed between the inner panel 32 and the outer panel 34. As shown in FIGS. 4 and 8, the traveling wind pathway 38 is formed in a region between the second panel 42 and the outer panel 34. As shown in FIG. 9, the traveling wind pathway 38 overlaps with the knee grip portion 8a in the back-and-forth direction in the vehicle side view.

The straddled vehicle 100 includes aero-stabilizing plates 51 and 52. The aero-stabilizing plates 51 and 52 are disposed in the traveling wind pathway 38. The aero-stabilizing plates 51 and 52 regulate the flow of traveling wind flowing through the traveling wind pathway 38. The aero-stabilizing plates 51 and 52 direct the traveling wind, flowing through the traveling wind pathway 38, to the knee grip portion 8a. In detail, as shown with arrow in FIG. 9, the traveling wind, flowing through the traveling wind pathway 38, is directed to the knee grip portion 8a by the aero-stabilizing plates 51 and 52. In other words, the traveling wind is accurately led to the vicinity of the thigh of the rider by the aero-stabilizing plates 51 and 52.

As shown in FIG. 8, the aero-stabilizing plates 51 and 52 have a flat plate. The aero-stabilizing plates 51 and 52 are made of resin and are integrally molded with the inner panel 32. The aero-stabilizing plates 51 and 52 protrude from the inner panel 32 in the vehicle width direction to be supported by the inner panel 32 in a cantilevered manner. The aero-stabilizing plates 51 and 52 are separated from the outer panel 34 in the vehicle width direction without being connected to the outer panel 34. The aero-stabilizing plates 51 and 52 are shaped to extend in the back-and-forth direction and gradually reduce in thickness from the inner side to the outer side in the vehicle width direction.

The aero-stabilizing plates 51 and 52 are configured almost not to generate a downforce. In other words, a downforce, enough to affect traveling of the straddled vehicle 100, is not generated at the aero-stabilizing plates 51 and 52. In detail, as shown in FIGS. 7 and 8, upper surfaces 51a and 52a and a lower surfaces 51b and 52b of the aero-stabilizing plates 51 and 52 are made in shape of an approximately flat surface without protrusions and recesses. Because of this, the aero-stabilizing plates 51 and 52 are smaller in front side projected area than, for instance, when the aero-stabilizing plates 51 and 52 per se are configured to generate a downforce by the lower surfaces 51b and 52b made in shape of a wing or fin curving to protrude downward in the vehicle side view. In the present embodiment, when traveling wind hits the aero-stabilizing plates 51 and 52, a pitching moment of roughly 3.16 N·m acts on the vehicle as a downforce and is absorbed as resin deflection of the exterior cover 22. In other words, a downforce, generated when the traveling wind hits the aero-stabilizing plates 51 and 52, is not enough to affect traveling of the straddled vehicle 100 and is absorbed by the resin deflection of the exterior cover 22; hence, the downforce does not act on the straddled vehicle 100.

As shown in FIG. 6, the aero-stabilizing plates 51 and 52 are at least partially exposed from the outer panel 34 in the vehicle side view. In detail, front ends 51c and 52c of the aero-stabilizing plates 51 and 52 are covered with the outer panel 34 in the vehicle side view. Rear ends 51d and 52d of the aero-stabilizing plates 51 and 52 are exposed from the outer panel 34 in the vehicle side view. It should be noted that the aero-stabilizing plates 51 and 52 may be entirely covered with the outer panel 34 in the vehicle side view.

In the aero-stabilizing plates 51 and 52, the rear ends 51d and 52d are located upward of the front ends 51c and 52c. Because of this, the aero-stabilizing plates 51 and 52 slant with respect to the back-and-forth direction in the vehicle side view. As shown in FIG. 4, the rear ends 51d and 52d of the aero-stabilizing plates 51 and 52 are located upward of the lower end 8b of the knee grip portion 8a. The rear ends 51d and 52d of the aero-stabilizing plates 51 and 52 are located downward of the upper end 36a of the inlet 36.

The aero-stabilizing plates 51 and 52 are disposed apart from each other at an interval in the up-and-down direction. The aero-stabilizing plates 51 and 52 are formed on the second panel 42. The aero-stabilizing plates 51 and 52 are formed behind the inlet 36 and adjacent to the inlet 36. The aero-stabilizing plates 51 and 52 overlap with the inlet 36 in the vehicle front view. The aero-stabilizing plate 52 is disposed below the aero-stabilizing plate 51. As shown in FIGS. 7 and 8, the aero-stabilizing plate 52 protrudes more outward than the aero-stabilizing plate 51 in the vehicle width direction. The aero-stabilizing plate 51 is an exemplary first aero-stabilizing plate, whereas the aero-stabilizing plate 52 is an exemplary second aero-stabilizing plate.

As shown in FIGS. 1 and 4, each side cover 23 is disposed between each exterior cover 22 and the fuel tank 7. Each side cover 23 is disposed above the second panel 42 of the inner panel 32 and the main frame 13. Each side cover 23 is disposed to continue at a rear portion thereof to the lateral surface of the fuel tank 7.

In the straddled vehicle 100 according to the present aspect, traveling wind, flowing through the traveling wind pathway 38, is directed to the knee grip portion 8a by the aero-stabilizing plates 51 and 52, whereby the traveling wind, flowing through the traveling wind pathway 38, hits the upper surface of the thigh of the rider so as to generate a downforce. In other words, the straddled vehicle 100 is configured such that the downforce acts on the vehicle body not by the aero-stabilizing plates 51 and 52 per se but through the rider. The aero-stabilizing plates 51 and 52 are provided for directing the traveling wind, flowing through the traveling wind pathway 38, to the knee grip portion 8a; hence, the downforce is almost not generated at the aero-stabilizing plates 51 and 52.

In detail, as described above, the aero-stabilizing plates 51 and 52 have a flat plate, and the aero-stabilizing plates 51 and 52 per se do not generate enough downforce to affect traveling of the straddled vehicle 100. Because of this, increase in size of, and complexity in shape of, the aero-stabilizing plates 51 and 52 can be inhibited compared to a configuration that a downforce is generated at the aero-stabilizing plates 51 and 52 per se. Furthermore, necessity to enhance the strength and/or the stiffness of the aero-stabilizing plates 51 and 52 are lessened; hence, the aero-stabilizing plates 51 and 52 can be made in a quite simple and compact structure. As a result, a downforce can be generated in the straddled vehicle 100 with the simple structure.

Besides, an effect of inhibiting a lift from acting on the rider can be obtained; hence, the rider is enabled to easily keep a riding style in high-speed traveling or so forth, whereby the rider is enhanced in comfortableness. Moreover, the rider becomes likely to feel a sense of unity with the vehicle body. Furthermore, the aero-stabilizing plates 51 and 52 are made in shape of a flat plate not in shape of a wing or fin; hence, traveling wind can be accurately led to the vicinity of the thigh of the rider by the aero-stabilizing plates 51 and 52. Furthermore, the aero-stabilizing plates 51 and 52 are provided on the inner panel 32 disposed on a vehicle inner side than the outer panel 34, whereby the traveling wind becomes likely to be led to the vicinity of the thigh of the rider by the aero-stabilizing plates 51 and 52.

One embodiment of the present invention has been explained above. However, the present invention is not limited to the embodiment described above, and a variety of changes can be made without departing from the gist of the present invention.

In the embodiment described above, the knee grip member 8 is integrated with the fuel tank 7; alternatively, the knee grip member 8 may be separated from the fuel tank 7. Incidentally, when the fuel tank 7 includes a tank cover, the tank cover may be provided with the knee grip portion 8a on the lateral surfaces of the tank cover.

In the embodiment described above, the inner panel 32 and the outer panel 34 are separated from each other; alternatively, the inner panel 32 and the outer panel 34 may be integrated with each other.

The aero-stabilizing plates 51 and 52 may be changed in number and layout. The aero-stabilizing plates 51 and 52 may be three or greater in number. Moreover, or alternatively, the inner panel 32 may be provided with only either at least one aero-stabilizing plate 51 or at least one aero-stabilizing plate 52.

### INDUSTRIAL APPLICABILITY

According to the present invention, a downforce can be generated in a straddled vehicle with a simple structure.

### REFERENCE SIGNS LIST

- 2: Vehicle body frame
- 7: Fuel tank
- 8: Knee grip member
- 8a: Knee grip portion
- 8b: Lower end of knee grip portion
- 9: Seat
- 10: Step
- 22: Exterior cover
- 32: Inner panel
- 34: Outer panel
- 36: Inlet
- 36a: Upper end of inlet
- 38: Traveling wind pathway
- 51: Aero-stabilizing plate (exemplary first aero-stabilizing plate)
- 52: Aero-stabilizing plate (exemplary second aero-stabilizing plate)
- 51a, 52a: Front end of aero-stabilizing plate
- 51d, 52d: Rear end of aero-stabilizing plate
- 100: Straddled vehicle

## Claims

1. A straddled vehicle comprising:
a vehicle body frame including a head pipe;
a fuel tank disposed behind the head pipe;
a seat disposed behind the fuel tank;
a knee grip member disposed behind the head pipe, the knee grip member including a knee grip portion disposed forward and downward of the seat, the knee grip portion sandwiched by right and left knees of a rider;
a step on which a foot of the rider is put, the step disposed rearward and downward of the knee grip portion;
an exterior cover disposed lateral to the head pipe, the exterior cover including an inner panel, an outer panel, and a traveling wind pathway, the outer panel disposed outside the inner panel in a vehicle width direction, the traveling wind pathway formed between the inner panel and the outer panel to cause traveling wind coming from ahead to flow therethrough; and
an aero-stabilizing plate directing the traveling wind flowing through the traveling wind pathway to the knee grip portion, wherein
the aero-stabilizing plate has a flat plate shape, the aero-stabilizing plate integrally molded with the inner panel, the aero-stabilizing plate protruding outward from the inner panel in the vehicle width direction to be supported by the inner panel in a cantilevered manner.

2. The straddled vehicle according to claim 1, wherein at least a portion of the aero-stabilizing plate is exposed from the outer panel in a vehicle side view.

3. The straddled vehicle according to claim 1 or 2, wherein a rear end of the aero-stabilizing plate is located on a vehicle upper side than a lower end of the knee grip portion.

4. The straddled vehicle according to any one of claims 1 to 3, wherein a rear end of the aero-stabilizing plate is located on an upper side than a front end of the aero-stabilizing plate.

5. The straddled vehicle according to claim 4, wherein
the exterior cover further includes an inlet for introducing the traveling wind to the traveling wind pathway, and
the rear end of the aero-stabilizing plate is located on a lower side than an upper end of the inlet.

6. The straddled vehicle according to any one of claims 1 to 5, wherein the knee grip member is the fuel tank.

7. The straddled vehicle according to any one of claims 1 to 6, wherein
the aero-stabilizing plate includes a first aero-stabilizing plate and a second aero-stabilizing plate disposed below the first aero-stabilizing plate, and
the second aero-stabilizing plate protrudes more outward than the first aero-stabilizing plate in the vehicle width direction.
